(19) **Europäisches Patentamt**

**European Patent Office**

**Office européen des brevets**

(11) **EP 0 906 857 B1**

(12) **EUROPEAN PATENT SPECIFICATION**

(45) Date of publication and mention
of the grant of the patent:
**25.08.2004   Bulletin 2004/35**

(51) Int Cl.$^7$: **B60T 8/26**, B60T 13/58,
B60T 1/10, B60L 7/24

(21) Application number: **98307987.2**

(22) Date of filing: **30.09.1998**

(54) **Method and apparatus for regenerative and friction braking**

Verfahren und Vorrichtung zur Nutz- und Reibungsbremsung

Méthode et dispositif pour freinage à récupération d' énergie et à frottement

(84) Designated Contracting States:
**DE FR GB**

(30) Priority:   **01.10.1997   US 942043**

(43) Date of publication of application:
**07.04.1999   Bulletin 1999/14**

(73) Proprietor: **Ford Motor Company**
**Dearborn, MI 48126 (US)**

(72) Inventor: **Schneider, Michael John**
**Bloomfiefd Hills Michigan 48304 (US)**

(74) Representative: **Messulam, Alec Moses**
**A. Messulam & Co. Ltd.,**
**43-45 High Road**
**Bushey Heath, Bushey, Herts WD23 1EE (GB)**

(56) References cited:
**EP-A- 0 667 269         US-A- 5 253 929**
**US-A- 5 450 324**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates generally to a method and apparatus for regenerative and friction braking of a motor vehicle having an electric drive motor. More particularly, the present invention relates to a braking system using wheel slip data to control the rear wheel braking in proportion to the front wheel braking.

Reference is made to co-pending applications, Attorney Docket Numbers 97-0842, 97-0843 and 97-0844, entitled "METHOD AND APPARATUS FOR PROPORTIONING REGENERATIVE BRAKING", "METHOD AND APPARATUS FOR REGENERATIVE AND FRICTION BRAKING" and "METHOD AND APPARATUS FOR REGENERATIVE AND ANTI-SKID FRICTION BRAKING", respectively, all filed on September 30, 1997 and assigned to the assignee of the present application.

The general principle of regenerative braking has been recognized by manufacturers of electric vehicles as a way of increasing the overall efficiency of the vehicle. Regenerative braking seeks to recover as much of the kinetic energy of the vehicle which is normally dissipated as heat through a normal hydraulic friction system by operating the electric motor drive even as a generator and restoring the generated electricity to a battery or other energy storage device. Various methods have been proposed for accomplishing regenerative braking in such electric vehicles, however, these regenerative systems generally require additional hardware above and beyond that normally associated with a hydraulic braking system.

For example, US 5 253 929 provides a system in which the hydraulic brake generates a pressure depending on the amount of depression of the brake pedal so as to mechanically brake at least rear driven wheels. The system requires several additional components over an above those required in the normal operation of the braking system of an electric vehicle. It would therefore be advantageous to provide a regenerative and friction braking system capable of recovering the kinetic energy normally lost through heat generation and dissipation resulting from the use of conventional hydraulic brake systems.

Accordingly, the present invention provides a regenerative and friction braking apparatus for a vehicle having one or more wheels driven by a drive motor, comprising: a master cylinder for generating a hydraulic signal in response to a driver brake command; a pressure sensor for generating a pressure signal representative of said hydraulic signal; an undriven wheel having a brake actuator and a speed sensor operatively associated therewith for generating an undriven wheel speed signal; and a driven wheel connected to the drive motor and having a brake actuator and a speed sensor operatively associated therewith for generating a driven wheel speed signal;

characterised by a throttle sensor for generating an acceleration signal in response to a driver acceleration command; a hydraulic control unit in fluid communication with said master cylinder and having a build and dump valve pairs in fluid communication with said brake actuators, and a build and dump valve pair in fluid communication with said brake actuator; a power storage device in communication with the drive motor; drive motor control means for commanding the drive motor to regeneratively brake said driven wheel in response to said acceleration signal and said pressure signal; and

brake control means for commanding said build and dump valve pair such that brake forces generated at said driven wheel is a combination of said regenerative braking and hydraulic braking by said brake actuator, said hydraulic braking being generated in response to a wheel speed error signal by modulation of said build and dump valve pair so as to maintain a predetermined front to rear brake proportioning.

The method of operating the regenerative and friction braking apparatus for the vehicle comprises the steps of: generating a hydraulic signal in response to a driver brake command as applied to a master cylinder; producing a pressure signal representative of the hydraulic signal; producing an acceleration signal in response to a driver acceleration command; producing undriven left and right wheel speed signals; producing driven left and right wheel speed signals; commanding a drive motor to regeneratively brake the driven left and right wheels in response to the acceleration signal and the pressure signal; determining a wheel speed error signal from the undriven wheel speed signals and the driven wheel speed signals; and modulating the pressure signal with third build and dump valve pair in response to the wheel speed error signal so as to control hydraulic braking generated at the driven left and right wheels to maintain a predetermined front to rear brake proportioning.

Advantageously, the method and apparatus for providing regenerative and friction braking efficiently recovers the kinetic energy normally lost through heat generation and dissipation resulting from the use of conventional hydraulic brake systems using conventional anti skid hardware.

The invention will now be described, by way of example, with reference to the accompanying drawings, in which:

Figure 1 is a schematic illustration of a motor vehicle incorporating a method and apparatus for regenerative and friction braking embodying the present invention;
Figure 2A is a high-level flow chart illustrating the interrelationship of the control of the motor and the brake system of a motor vehicle incorporating a method and apparatus for regenerative and friction braking embodying the present invention;
Figure 2B is a flow chart illustrating motor control logic embodying the present invention;

Figure 2C is a flow chart illustrating brake control logic embodying the present invention; and

Figure 3 is graph illustrating a deadband used by a controller embodying the present invention.

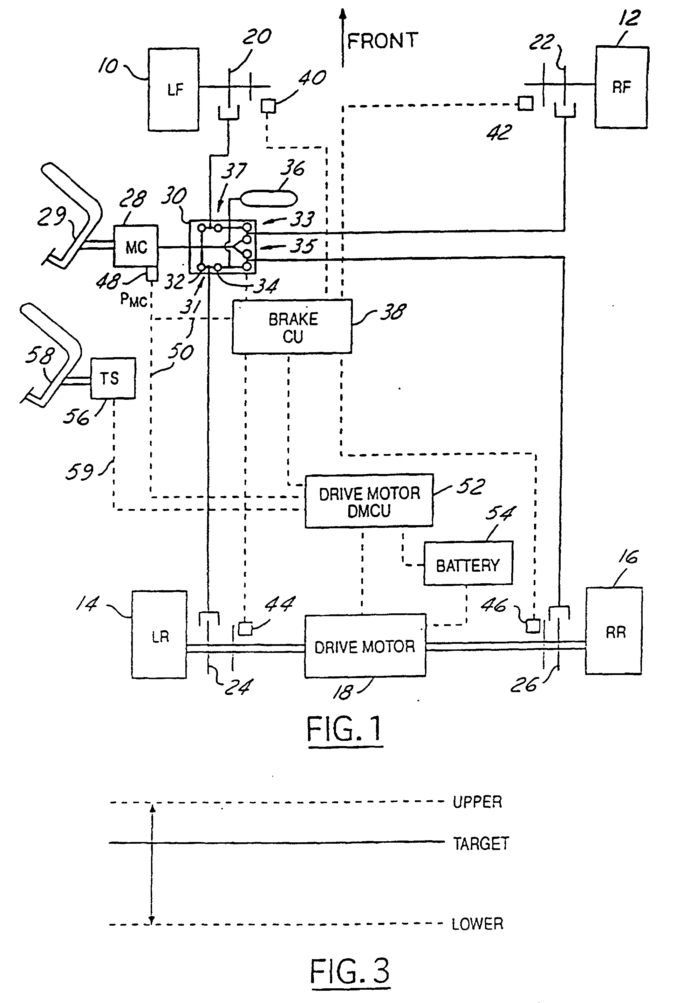

Referring now to Figures 1, the example vehicle braking system illustrated includes left and right front wheel 10 and 12 and left and right rear wheels 14 and 16 driven by an electric drive motor 18. The front and rear wheel 10, 12, 14 and 16 have respective hydraulic brakes 20, 22, 24 and 26 actuated by hydraulic pressure generated by a master cylinder 28 in response to an operators brake demand generated through a brake pedal 29. The brake actuators 20, 22, 24 and 26 are hydraulically coupled to the master cylinder 28 by hydraulic control unit 30.

The hydraulic control unit 30 includes four pairs of valves, 31, 33, 35 and 37, each pair having a build valve 32 and a dump valve 34 (for each brake actuator) and a hydraulic pump (not shown). The inlet side of the build valve is hydraulically connected to the master cylinder and the outlet side of the build valve communicates hydraulic fluid to the associated dump valve and its associated brake actuator. The dump valve 34 communicates hydraulic fluid to a brake fluid accumulator 36. The build and dump valve pairs operate in manner similar to build and dump valves found on conventional anti-skid systems, permitting the hydraulic pressure at the individual brake actuators to be regulated. Using the master cylinder as the input, this pressure can range from zero up to the full pressure of the master cylinder.

The build valve 32 and dump valve 34 are of the electromagnetic valve configuration and receive their control signal from a brake control unit (BCU) 38. The BCU uses data collected from left and right front wheel speed sensors 40, 42 and left and right rear wheel speed sensors 44, 46 and a pressure sensor 48 associated with the master cylinder for generating a master cylinder pressure signal 50. The BCU is also in communication with the drive motor control unit (DMCU) 52 and shares data therewith so that the rear wheels may cooperatively be regeneratively braked by the drive motor 18 in order to charge an energy storage device such as a battery 54. The DMCU is further in communication with a throttle sensor 56 which is operated by a conventional accelerator pedal 58 in response to the foot pressure applied by the vehicle operator.

The BCU 38 and the DMCU 52 cooperatively control the front and rear brakes 20, 22, 24 and 26 to establish a desired braking condition as requested by the driver and represented by the master cylinder pressure signal 50.

The control units 38, 52 each are microprocessor based devices including random access and read-only memories and appropriate input/output interface circuitry to receive the input signals and provide the command outputs as described and shown. Construction of suitable controllers is within the level of one skilled in the art.

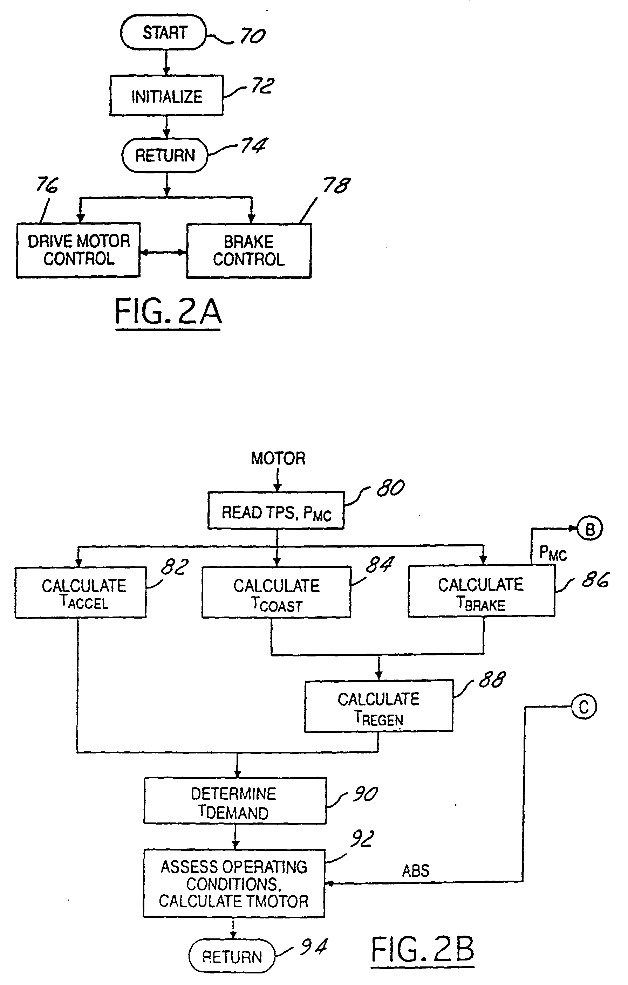

Referring now to Figure 2A, in general the BCU and DMCU operate in tandem and share data. In the preferred embodiment, this exchange of data occurs via a multiplex communication bus. In view of this, the operation of the DMCU will be described first and the operation of the BCU will be described thereafter with interdependencies being described where they occur. It should be recognized that the various steps being described are described in the illustrated sequence for convenience, it being understood that there is no specific order unless specifically mentioned. As a further note, those skilled in the art will recognize that the logic of the control systems illustrated and described may be implemented in a single controller, or as shown in two separate controller units.

As represented by the flow chart of Figure 2A, the vehicle is started at block 70 and various system parameters are initialized at block 72 in each of the controllers.

During operation, the drive motor control 76 and the brake control 78 will issue commands to return to the top of the flow chart at the return block 74.

Referring now to Figures 2A & 2B, the DMCU 52 implements the drive motor control 76, which includes the steps represented by the flow chart shown. At block 80, the DMCU 52 senses acceleration command via the throttle position sensor 56, which provides an acceleration signal representing the displacement of the accelerator pedal 58 in response to a pressure applied to the accelerator pedal 58 by the operator. Similarly, the drive motor controller senses a braking command by sensing the master cylinder pressure which exists when the vehicle operator applies pressure to the brake pedal 29 at the pressure sensor 48.

At block 82, the DMCU 52, in response to the acceleration signal, determines an appropriate acceleration torque necessary to satisfy the acceleration command, $T_{ACCEL}$. At block 84, the DMCU determines whether coast down braking is required to simulate the compression braking created by a part or closed throttle condition of an internal combustion engine. In a conventional manner, the motor controller evaluates the acceleration signal, the motor RPM and other vehicle operating parameters and determines an appropriate coast down torque, $T_{COAST}$.

At block 86, the motor controller takes the pressure signal 50 generated by the pressure sensor 48 and determines an appropriate amount of braking torque, $T_{BRAKE}$, to be generated by the drive motor according to the following relationship:

$$T_{BRAKE} = P_{MC} * K_B$$

where $P_{MC}$ is a value corresponding to the pressure signal and $K_B$ is a constant empirically derived in view of the characteristics of the brake system. It should be recognized that more complex methods may be used for determining $T_{BRAKE}$, such as the use of a lookup table representing the ideal front to rear brake proportioning relationship for the given vehicle. Ideal front to rear brake proportioning, as used herein, means controlling the rear wheels to have the same or substantially the same slip as the corresponding front wheel. At block 88 the DMCU determines the total torque for regenerative motor control, $T_{REGEN}$, by adding $T_{COAST}$ and $T_{BRAKE}$.

At block 90, the motor controller determines the total torque demand, $T_{DEMAND}$, by summing $T_{ACCEL}$ and $T_{REGEN}$. At block 92, the DMCU accesses a variety of operating conditions to determine whether or not the drive motor 18 can be operated and whether the torque command exceeds predetermined limits of the drive motor. For instance, the DMCU may invoke power conserving modes if there is low voltage in the battery 54 to limit the energy available for acceleration or similarly if the battery is substantially charged, the DMCU may limit the regenerative torque. Another condition which may result in limited or no regenerative torque being created by the drive motor is if an ABS flag is set to indicate an ABS event, which will be described in greater detail below. After determining what limitations apply, the DMCU issues a motor torque signal, TMOTOR, to command the drive motor and returns via return block 94 to return block 74.

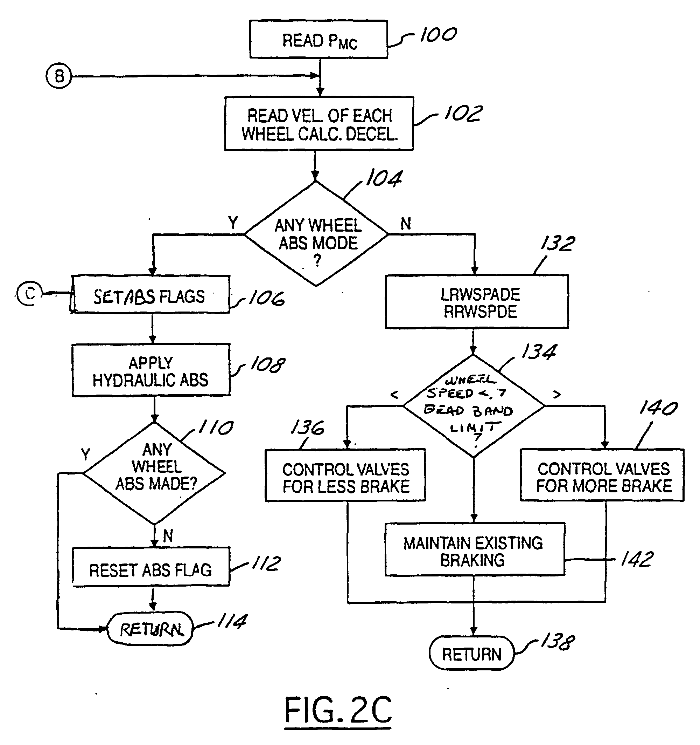

Referring now to Figures 2A & 2C, the BCU 38 implements the brake control 78, which includes the steps represented by the flow chart shown. At block 100 the BCU 38 reads the master cylinder pressure signal 50 as generated by the pressure sensor 48. BCU advances to block 102 where each of the wheel speeds sensors 40, 42, 44 and 46 are read. Using this data, the BCU estimates the vehicle velocity and calculates the deceleration of each wheel 10, 12, 14 and 16.

At block 104 the brake controller determines whether any of the four wheels are in an ABS mode. This determination may be made by comparing the deceleration rate of a given wheel and its instantaneous velocity to predetermined thresholds in a manner familiar to those skilled in the art of anti-skid braking control. If any one of the wheels is determined to require antiskid control, the BCU ABS mode, controller advances to block 106 where an ABS flag is set to indicate that anti-skid control is engaged. This signal is communicated to the DMCU where, at block 92, regenerative braking is disabled or reduced in accordance with the abs mode entered.

At block 108, the BCU controls the brakes in accordance with known hydraulic anti-skid brake control. The BCU proceeds to 110 where the brake controller again determines whether or not the system continues to require anti-skid control in the same manner as done at block 104. If the system is still in anti-skid control, the BCU proceeds to block 114. If, however, antiskid control is no longer required based on the query in 110, the controller proceeds to block 112 where the ABS flag is reset and the brake controller returns to return block 74 via the return block 114.

At block 104, if the BCU determines that none of the wheels are in ABS mode, control proceeds to block 132 where rear wheel speed errors are calculated according to the following relationships:

$$LRWSPDE = LRWSPDT - LRWSPD$$

$$RRWSPDE = RRWSPDT - RRWSPD$$

where LRWSPDE and RRWSPDE represent the error signals for the left and right rear wheels, respectively. Also, LRWSPDT and RRWSPDT represent the left and right rear wheel speed targets, which are established by setting these values equal to the corresponding front wheel speed, that is LRWSPDT = LFWSPD, where LFWSPD is the left front wheel speed and RRWSPDT = RFWSPD where RFWSPD is the speed of the right front wheel. Alternatively, these targets could also be established as a mathematical function of the front wheel speed. It should be recognized that the error itself could also be represented by the difference of the wheel speed and the deadband limits. Following this convention, LRWSPD and RRWSPD are the left and right rear wheel speeds, respectively.

As an alternative, in the event that the system is built using a single build and dump valve pair for controlling the brake actuators on the driven axle, only a single target need be set. In a system having separate right and left driven wheel speed signals, it would be advantageous to set the target equal to either the average of the front wheel speeds or to the front wheel speed on the side of the vehicle corresponding to the side having the lower of the two rear wheel speeds. In the event there is only one rear wheel speed signal, either the lower of the two front wheel speed signals or an average of the two front wheel speed signals would be used as the target.

At block 134, the BCU evaluates the individual right and left rear wheel speed signals to determine whether the wheel speeds are within a predetermined deadband. Referring to Figure 3, a graph illustrating the relationship of upper and lower deadband limits set about a given target speed. The upper and lower deadbands may be found by adding and subtracting constant values to the target value or by adding and subtracting a predetermined percentage of the target value. The upper and lower deadband limits may or may not be equally spaced about the target. Depending on whether the wheel speeds are within the deadband or out determines the next operation of the BCU.

Referring back now to Figure 2C, the BCU proceeds to block 136 if one of the wheel speeds is below the lower deadband limit, and the BCU commands the hydraulic control unit 30 to reduce the brake pressure for the actuator of that rear wheel.

The hydraulic control unit 30 accomplishes this by opening the dump valve 34 for the given brake actuator such that brake pressure in the line at the brake actuator can vent to the accumulator 36. The dump valve 34 is operated via a pulse width modulated (pwm) signal generated by the BCU in proportion to the wheel speed error. The BCU proceeds via return block 138 to return block 74.

If one of the wheel speed signals is above the upper deadband limit, indicating the rear wheel speed is too high, the BCU proceeds to block 140 to open the build valves 32 and build pressure in the actuator of that wheel. This is done via a control signal sent from the BCU to the hydraulic control unit in the form of a pulse width modulated signal proportional to the wheel speed error. It should be recognized by those skilled in the art that the pulse width modulated signal used for controlling the build and dump valves can be derived using proportional, integral and derivative control schemes as well as any other method. The BCU returns to block 74 via return block 138.

If the wheel speed is within the deadband, the BCU takes no action, thus maintaining the existing brake pressures and passing through block 142 to return block 74 via return block 138.

Therefore, under normal braking the regenerative brake system of the present invention operates by first having the DMCU command the drive motor to generate a regenerative braking torque, $T_{REGEN}$ and the BCU closes the build valve to cut off brake pressure to the rear actuators. Thereafter, the hydraulic brake system supplements this braking to the extent necessary to achieve desired front to rear proportioning of the overall braking forces generated during braking events that do not invoke anti-skid control. The desired front to rear brake proportioning is achieved by controlling the individual rear wheel speeds to be approximately equal to the wheel speed of the corresponding front wheel. The result of this control scheme is the generation of maximum regenerative braking from the driven rear wheels while maintaining a predetermined level of front to rear proportioning that is supplemented with hydraulic braking only when the braking demand exceeds the regenerative braking capacity of the drive motor. Any supplemental hydraulic braking is proportioned according to the wheel speeds which are representative of wheel slip.

The foregoing description presents a preferred embodiment of the present invention. Details of construction have been shown and described for purposes of illustration rather than limitation. For instance, it could be advantageous to use a single valve for controlling the hydraulic pressure applied to brake actuators for the driven wheels of the vehicle, thus reducing complexity and cost over a system having both a build and a dump valves. Additionally, the present invention could be applied to vehicles having the driven wheels located at either the front or rear of the vehicles.

**Claims**

1. A regenerative and friction braking apparatus for a vehicle having one or more wheels driven by a drive motor (18), comprising:

   a master cylinder (28) for generating a hydraulic signal in response to a driver brake command;
   a pressure sensor (48) for generating a pressure signal representative of said hydraulic signal;
   an undriven wheel (10) having a brake actuator (20) and a speed sensor (40) operatively associated therewith for generating an undriven wheel speed signal; and
   a driven wheel (14) connected to the drive motor and having a brake actuator (24) and a speed sensor (44) operatively associated therewith for generating a driven wheel speed signal; **characterised by** a throttle sensor (56) for generating an acceleration signal in response to a driver acceleration command;
   a hydraulic control unit (30) in fluid communication with said master cylinder (28) and having a build and dump valve pairs (37) in fluid communication with said brake actuators (20), and a build and dump valve pair (31) in fluid communication with said brake actuator (24);
   a power storage device (54) in communication with the drive motor (18);
   drive motor control means (52) for commanding the drive motor to regeneratively brake said driven wheel in response to said acceleration signal and said pressure signal; and
   brake control means (38) for commanding said build and dump valve pair (31) such that brake forces generated at said driven wheel is a combination of said regenerative braking and hydraulic braking by said brake actuator (24), said hydraulic braking being generated in response to a wheel speed error signal by modulation of said build and dump valve pair (31) so as to maintain a predetermined front to rear brake proportioning.

2. A regenerative and friction braking apparatus according to claim 1, wherein said wheel speed error signal is determined by differencing said driven wheel speed signal with an average of undriven left and right wheel speed signals.

3. A regenerative and friction braking apparatus according to claim 1, wherein left and right wheel speed error signals are determined by differencing driven left and right wheel speed signals and undriven left and right wheel speed signals, respectively

4. A regenerative and friction braking apparatus according to claim 1, wherein said wheel speed error signal is determined by differencing the lower of driven left and right wheel speed signals with its corresponding undriven left and right wheel speed signals.

5. A regenerative and friction braking apparatus according to claim 1, wherein said drive motor control means selectively reduces said regenerative braking in response to predetermined system conditions and said brake control means increases said hydraulic braking by said driven wheel brake actuator, by further modulation of said build and dump valve pair which is in fluid communication with said driven wheel brake actuator, so as to maintain said predetermined front to rear brake proportioning.

6. A regenerative and friction braking apparatus as claimed in any preceding claim wherein the driven and undriven wheels include:

an undriven left wheel having a first brake actuator and a first speed sensor operatively associated therewith;

an undriven right wheel having a second brake actuator and a second speed sensor operatively associated therewith;

a driven left wheel connected to the drive motor and having a third brake actuator and a third speed sensor operatively associated therewith;

a driven right wheel connected to the drive motor and having a fourth brake actuator and a fourth speed sensor operatively associated therewith;

a hydraulic control unit in fluid communication with said master cylinder and having first, second, third and fourth build and dump valve pairs in fluid communication with said first, second, third and fourth brake actuators, respectively;

wherein said drive motor control means commands the drive motor to regeneratively brake said driven left and right wheels in response to said acceleration signal and said pressure signal; and

wherein said brake control means command said first and second build valves to an open position and said first and second dump valve pairs to a closed position during non-anti-skid brake operation and for further commanding said third and fourth build and dump valve pairs such that brake forces generated at said driven left and right wheels are a combination of said regenerative braking and hydraulic braking by said third and fourth hydraulic actuators, said hydraulic braking being generated in response to left and right wheel speed error signals by modulation of said third and fourth build and dump valve pairs so as to maintain a predetermined front to rear brake proportioning during non-anti-skid brake operation.

7. A regenerative and friction braking apparatus as claimed in claim 6, wherein said left and right wheel speed error signals are determined by differencing said driven left and right wheel speed signals with said undriven left and right wheel speed signals, respectively.

8. A regenerative and friction braking apparatus as claimed in claim 6, wherein said left and right wheel speed error signals are determined by a predetermined percentage of a difference of said driven left and right wheel speed signals and said undriven right and left wheel speed signals, respectively.

9. A regenerative and friction braking apparatus as claimed in claim 6, wherein said drive motor control means selectively reduces said regenerative braking in response to predetermined system conditions and said brake control means increases said hydraulic braking by said third and fourth hydraulic actuators, by further modulation of said third and fourth build and dump valve pairs so as to maintain said predetermined front to rear brake proportioning.

10. A method of operating a regenerative and friction braking apparatus for a vehicle having one or more wheels driven by a drive motor, comprising the steps of:

generating a hydraulic signal in response to a driver brake command as applied to a master cylinder;

producing a pressure signal representative of said hydraulic signal;

producing an acceleration signal in response to a driver acceleration command;

producing an undriven speed signal;

producing a driven wheel speed signal;

commanding a drive motor to regeneratively brake said driven wheel in response to said acceleration signal and said pressure signal;

determining a wheel speed error signal from said undriven wheel speed signal and said driven wheel speed signal; and

modulating said hydraulic signal with third build and dump valve pair in response to said wheel speed error signal so as to control hydraulic braking generated at said driven wheel to maintain a predetermined front to rear brake proportioning.

**Patentansprüche**

1. Regenerative und Reibungsbremsvorrichtung für ein Fahrzeug, das ein oder mehrere von einem Antriebsmotor (18) angetriebene Räder aufweist, umfassend:

    einen Hauptzylinder (28) zum Erzeugen eines hydraulischen Signals als Reaktion auf einen Fahrerbremsbefehl;
    einen Druckfühler (48) zum Erzeugen eines Drucksignals stellvertretend für das hydraulische Signal;
    ein nicht angetriebenes Rad (10), das einen Bremszylinder (20) und einen Drehzahlfühler (40), die wirkend mit dem Rad verbunden sind, um ein nicht angetriebenes Raddrehzahlsignal zu erzeugen, aufweist; und
    ein angetriebenes Rad (14), das mit dem Antriebsmotor verbunden ist und einen Bremszylinder (24) und einen Drehzahlfühler (44), die wirkend mit dem Rad verbunden sind, aufweist, um ein angetriebenes Raddrehzahlsignal zu erzeugen;
    **gekennzeichnet durch**
    einen Drosselfühler (56) zum Erzeugen eines Beschleunigungssignals als Reaktion auf einen Fahrerbeschleunigungsbefehl;
    eine hydraulische Steuereinheit (30), die in Flüssigkeitsverbindung mit dem Hauptzylinder (28) steht und ein Ansaug- und Ablassventilpaar (37) in Flüssigkeitsverbindung mit den Bremszylindern (20), und ein Ansaug- und Ablassventilpaar (31) in Flüssigkeitsverbindung mit dem Bremszylinder (24), aufweist;
    eine Energiespeichervorrichtung (54), die mit dem Antriebsmotor (18) verbunden ist;
    Antriebsmotorsteuerungsmittel (52) zum Anweisen des Antriebsmotors, das angetriebene Rad als Reaktion auf das Beschleunigungssignal und das Drucksignal regenerativ zu bremsen; und
    Bremssteuerungsmittel (38) zum Regeln des Ansaug- und Ablassventilpaares (31), so dass Bremskräfte, die am angetriebenen Rad erzeugt werden, eine Kombination aus dem regenerativen Bremsen und hydraulischem Bremsen **durch** den Bremszylinder (24) sind, wobei das hydraulische Bremsen als Reaktion auf ein Raddrehzahlfehlersignal **durch** Abstimmen des Ansaug- und Ablassventilpaares (31) erzeugt wird, um eine vorbestimmte Bremsverteilung zwischen vorne und hinten beizubehalten.

2. Regenerative und Reibungsbremsvorrichtung nach Anspruch 1, wobei das Raddrehzahlfehlersignal bestimmt wird, indem das angetriebene Raddrehzahlsignal mit einem Mittelwert des linken und des rechten nicht angetriebenen Raddrehzahlsignals verglichen wird.

3. Regenerative und Reibungsbremsvorrichtung nach Anspruch 1, wobei das linke und das rechte Raddrehzahlfehlersignal bestimmt wird, indem das linke und das rechte angetriebene Raddrehzahlsignal mit dem linken beziehungsweise dem rechten nicht angetriebenen Raddrehzahlsignals verglichen wird.

4. Regenerative und Reibungsbremsvorrichtung nach Anspruch 1, wobei das Raddrehzahlfehlersignal bestimmt wird, indem das niedrigere der beiden angetriebenen Raddrehzahlsignale links und rechts mit dem entsprechenden linken beziehungsweise rechten nicht angetriebenen Raddrehzahlsignal verglichen wird.

5. Regenerative und Reibungsbremsvorrichtung nach Anspruch 1, wobei das Antriebsmotorsteuerungsmittel die regenerative Bremsung als Reaktion auf vorbestimmte Systembedingungen gezielt verringert, und das Bremssteuerungsmittel die hydraulische Bremsung durch den Bremszylinder des angetriebenen Rades durch weiteres Regeln des Ansaug- und Ablassventilpaares, das in Flüssigkeitsverbindung mit dem Bremszylinder des angetriebenen Rades steht, erhöht, um die vorbestimmte Bremsverteilung zwischen vorne und hinten beizubehalten.

6. Regenerative und Reibungsbremsvorrichtung nach einem der vorhergehenden Ansprüche, wobei die angetriebenen und nicht angetriebenen Räder umfassen:

    ein nicht angetriebenes linkes Rad, das einen ersten Bremszylinder und einen ersten Drehzahlfühler, die wirkend mit dem Rad verbunden sind, aufweist;
    ein nicht angetriebenes rechtes Rad, das einen zweiten Bremszylinder und einen zweiten Drehzahlfühler, die wirkend mit dem Rad verbunden sind, aufweist;
    ein angetriebenes linkes Rad, das mit dem Antriebsmotor verbunden ist und einen dritten Bremszylinder und einen dritten Drehzahlfühler, die wirkend mit dem Rad verbunden sind, aufweist;
    ein angetriebenes rechtes Rad, das mit dem Antriebsmotor verbunden ist und einen vierten Bremszylinder und einen vierten Drehzahlfühler, die wirkend mit dem Rad verbunden sind, aufweist;
    eine hydraulische Steuerungseinheit in Flüssigkeitsverbindung mit dem Hauptzylinder, die erste, zweite, dritte und vierte Ansaug- und Ablassventilpaare in Flüssigkeitsverbindung mit den ersten, zweiten, dritten beziehungsweise vierten Bremszylinder aufweist;

wobei das Antriebsmotorsteuerungsmittel den Antriebsmotor anweist, die angetriebenen linken und rechten Räder als Reaktion auf das Beschleunigungssignal und das Drucksignal regenerativ abzubremsen; und
wobei das Bremssteuerungsmittel im Nicht-Anti-Schleuder-Bremsbetrieb die ersten und zweiten Ansaugventile anweist, eine offene Stellung einzunehmen, und die ersten und zweiten Ablassventile anweist, eine geschlossene Stellung einzunehmen, und des Weiteren die dritten und vierten Ansaug- und Ablassventilpaare so regelt, dass Bremskräfte, die an den angetriebenen linken und rechten Rad erzeugt werden, eine Kombination des regenerativen Bremsens und des hydraulischen Bremsens durch die dritten und vierten hydraulischen Zylinder sind, wobei das hydraulische Bremsen erzeugt wird als Reaktion auf linke und rechte Raddrehzahlfehlersignale durch Regeln der dritten und vierten Ansaug- und Ablassventilpaare, so dass während dem Nicht-Anti-Schleuder-Bremsvorgang eine vorbestimmte Bremsverteilung zwischen vorne und hinten beibehalten wird.

7. Regenerative und Reibungsbremsvorrichtung nach Anspruch 6, wobei die linken und rechten Raddrehzahlfehlersignale bestimmt werden, indem die linken und rechten angetriebenen Raddrehzahlsignale mit dem linken beziehungsweise dem rechten nicht angetriebenen Raddrehzahlsignal verglichen werden.

8. Regenerative und Reibungsbremsvorrichtung nach Anspruch 6, wobei die linken und rechten Raddrehzahlfehlersignale durch einen vorbestimmten Prozentsatz einer Differenz zwischen dem linken und rechten angetriebenen Raddrehzahlsignal und dem linken beziehungsweise dem rechten nicht angetriebenen Raddrehzahlsignal bestimmt werden.

9. Regenerative und Reibungsbremsvorrichtung nach Anspruch 6, wobei das Antriebsmotorsteuerungsmittel das regenerative Bremsen als Reaktion auf vorbestimmte Systembedingungen gezielt verringert, und das Bremssteuerungsmittel das hydraulische Bremsen durch die dritten und vierten hydraulischen Zylinder erhöht, indem die dritten und vierten Ansaug- und Ablassventilpaare weiter geregelt werden, um die vorbestimmte Bremsverteilung zwischen vorne und hinten beizubehalten.

10. Verfahren zum Betrieb einer regenerativen und Reibungsbremsvorrichtung für ein Fahrzeug, das ein oder mehrere von einem Antriebsmotor angetriebene Räder aufweist, umfassend die Schritte:

Erzeugen eines hydraulischen Signals als Reaktion auf einen Fahrerbremsbefehl, das auf einen Hauptzylinder übertragen wird;
Erzeugen eines Drucksignals stellvertretend für das hydraulische Signal;
Erzeugen eines Beschleunigungssignals als Reaktion auf einen Fahrerbeschleunigungsbefehl;
Erzeugen eines nicht angetriebenen Raddrehzahlsignals;
Erzeugen eines angetriebenen Raddrehzahlsignals;
Anweisen eines Antriebsmotors zum regenerativen Bremsen des angetriebenen Rades als Reaktion auf das Beschleunigungssignal und das Drucksignal;
Bestimmen eines Raddrehzahlfehlersignals aus dem nicht angetriebenen Raddrehzahlsignal und dem angetriebenen Raddrehzahlsignal; und
Anpassen des hydraulischen Signals mit dem dritten Ansaug- und Ablassventilpaar als Reaktion auf das Raddrehzahlfehlersignal, um das am angetriebenen Rad erzeugte hydraulische Bremsen zu steuern, um eine vorbestimmte Bremsverteilung zwischen vorne und hinten beizubehalten.

## Revendications

1. Un dispositif de freinage à récupération d'énergie et à frottement pour un véhicule ayant une ou plusieurs roues entraînées par un moteur d'entraînement (18), comprenant :

un maître-cylindre (28) pour générer un signal hydraulique en réponse à une commande de frein de conducteur,
un capteur de pression (48) pour générer un signal de pression représentatif dudit signal hydraulique ;
une roue non entraînée (10) comprenant un actionneur de frein (20) et un capteur de vitesse (40), qui lui sont fonctionnellement associés pour générer un signal de vitesse de roue non entraînée ; et
une roue entraînée (14) reliée au moteur d'entraînement et ayant un actionneur de frein (24) et un capteur de vitesse (44) qui sont fonctionnellement associés pour générer un signal de vitesse de roue entraînée ;

**caractérisé par**
un capteur d'étranglement (56) pour générer un signal d'accélération en réponse à une commande d'accélération de conducteur ;

une unité de commande hydraulique (30), en communication fluidique avec ledit maître-cylindre (28) et ayant des paires de soupapes de charge et de décharge (37), en communication fluidique avec les actionneurs de frein (20), et une paire de soupapes de charge et de décharge (31) en communication fluidique avec l'actionneur (24) ;

un dispositif de stockage de puissance (54) en communication avec le moteur d'entraînement (18) ;

des moyens de commande de moteur d'entraînement (52) pour commander le moteur d'entraînement afin de produire un freinage régénératif de ladite roue entraînée en réponse audit signal d'accélération et audit signal de pression ; et

des moyens de commande de frein (38) pour commander ladite paire de soupapes de charge et de décharge (31), de manière que les forces de freinage générées à ladite roue entraînée soient une combinaison dudit freinage à récupération d'énergie et du freinage hydraulique, par ledit actionneur de frein (24), ledit freinage hydraulique étant généré en réponse à un signal d'erreur de vitesse de roue par modulation de ladite paire de soupapes de charge et de décharge (31) de manière à maintenir un proportionnement ou une répartition prédéterminé (e) du freinage à l'avant et à l'arrière.

2. Un dispositif de freinage à récupération d'énergie et à frottement selon la revendication 1, dans lequel ledit signal d'erreur de vitesse de roue est déterminé en formant la différence entre ledit signal de vitesse de roue entraînée et une moyenne des signaux de vitesse de roue non entraînée droite et gauche.

3. Un dispositif de freinage à récupération d'énergie et à frottement selon la revendication 1, dans lequel les signaux d'erreur de vitesse de roue droite et gauche sont déterminés en formant la différence entre les signaux de vitesse de roue entraînée droite et gauche et les signaux de vitesse de roue non entraînée respectivement droite et gauche.

4. Un dispositif de freinage à récupération d'énergie et à frottement selon la revendication 1, dans lequel ledit signal d'erreur de vitesse de roue est déterminé en formant la différence entre le plus faible desdits signaux de vitesse de roue entraînée droite et gauche et les signaux de vitesse correspondants de roue non entraînée droite et gauche.

5. Un dispositif de freinage à récupération d'énergie et à frottement selon la revendication 1, dans lequel lesdits moyens de commande de moteur d'entraînement réduisent sélectivement ledit freinage à récupération d'énergie en réponse à des conditions de système prédéterminées, et lesdits moyens de commande de frein augmentent ledit freinage hydraulique par ledit actionneur de frein de roue entraînée, par une modulation supplémentaire de ladite paire de soupapes de charge et de décharge qui est en communication fluidique avec ledit actionneur de frein de roue entraînée, de manière à maintenir ladite proportion prédéterminée du freinage, entre l'avant et l'arrière.

6. Un dispositif de freinage à récupération d'énergie et à frottement selon l'une quelconque des revendications précédentes, dans lequel les roues entraînées et non entraînées comprennent :

une roue non entraînée gauche ayant un premier actionneur de frein et un premier capteur de vitesse lui étant fonctionnement associés ;
une roue non entraînée droite ayant un deuxième actionneur de frein et un deuxième capteur de vitesse lui étant fonctionnement associés ;
une roue entraînée droite, reliée au moteur d'entraînement et ayant un troisième actionneur de frein et un troisième capteur de vitesse fonctionnellement associés à elle;
une roue entraînée gauche, reliée au moteur d'entraînement et ayant un quatrième actionneur de frein et un quatrième capteur de vitesse fonctionnellement associés à elle ;
une unité de commande hydraulique en communication fluidique avec ledit maître-cylindre et ayant des premières, deuxièmes, troisièmes et quatrièmes paires de soupapes de charge et de décharge en communication fluidique avec lesdits premiers, deuxième, troisième et quatrièmes actionneurs de frein, respectivement ;

dans lequel lesdits moyens de commande de moteur d'entraînement commandent le moteur d'entraînement afin de produire un freinage régénératif desdites roues entraînées droite et gauche en réponse audit signal d'accélération et audit signal de pression ; et

dans lequel lesdits moyens de commande de frein commandent les premières et deuxièmes soupapes de charge à une position ouverte, et lesdites premières et deuxièmes paires de soupapes de décharge à une position fermée pendant l'opération de freinage non anti-dérapage et pour commander encore lesdites troisièmes et quatrièmes paires de soupapes de charge et de décharge, de manière que les forces de freinage générées auxdites roues entraînées droite et gauche, soient une combinaison dudit freinage à récupération d'énergie et dudit freinage hydraulique par lesdits troisièmes et quatrièmes actionneurs hydrauliques, ledit freinage hydraulique étant généré en réponse aux signaux d'erreur de vitesse de roue droite et gauche par modulation desdites troisièmes et quatrièmes paires de soupapes de charge et de décharge, de manière à maintenir une proportion prédéterminée du freinage entre l'avant et l'arrière pendant l'opération de freinage non anti-dérapage.

**7.** Un dispositif de freinage à récupération d'énergie et à frottement selon la revendication 6, dans lequel lesdits signaux d'erreur de vitesse de roue droite et gauche sont déterminés en formant la différence entre lesdits signaux de vitesse de roue entraînée droite et gauche, et lesdits signaux de vitesse de roue non entraînée droite et gauche, respectivement.

**8.** Un dispositif de freinage à récupération d'énergie et à frottement selon la revendication 6, dans lequel lesdits signaux d'erreur de vitesse de roue droite et gauche sont déterminés par un pourcentage prédéterminé d'une différence entre lesdits signaux de vitesse de roue droite et gauche entraînée, et lesdits signaux de vitesse de roue non entraînée droite et gauche, respectivement.

**9.** Un dispositif de freinage à récupération d'énergie et à frottement selon la revendication 6, dans lequel lesdits moyens de commande de moteur d'entraînement réduisent sélectivement ledit freinage à récupération d'énergie en réponse à des conditions de système prédéterminées et lesdits moyens de commande de frein augmentent ledit freinage hydraulique par lesdits troisièmes et quatrièmes actionneurs, par une modulation supplémentaire desdites troisièmes et quatrièmes paires de soupapes de charge et de décharge, de manière à maintenir ladite proportion prédéterminée du freinage à l'avant et à l'arrière.

**10.** Un procédé pour mettre en oeuvre un dispositif de freinage à récupération d'énergie et à frottement pour un véhicule comportant un ou plusieurs roues entraînées par un moteur d'entraînement, comprenant les étapes consistant à :

generer un signal hydraulique en réponse à une commande de frein de conducteur qui est appliquée à un maître-cylindre ;

produire un signal de pression, représentatif dudit signal hydraulique ;

produire un signal d'accélération en réponse à une commande d'accélération de conducteur ;

produire un signal de vitesse de roue non entraînée ;

produire un signal de vitesse de roue entraînée ;

commander un moteur d'entraînement pour freiner régénérativement ladite roue entraînée, en réponse audit signal d'accélération et audit signal de pression ;

déterminer un signal d'erreur de vitesse de roue à partir dudit signal de vitesse de roue non entraînée et ledit signal de vitesse de roue entraînée ; et

moduler ledit signal hydraulique avec la troisième paire de soupapes de charge et de décharge en réponse audit signal d'erreur de vitesse de roue, de manière à commander le freinage hydraulique généré à ladite roue entraînée, pour maintenir une proportion prédéterminée du freinage à l'avant et à l'arrière.

FRONT

LF

RF

MC

P_MC

TS

BRAKE
CU

DRIVE MOTOR
DMCU

BATTERY

LR

DRIVE MOTOR

RR

<u>FIG.1</u>

UPPER

TARGET

LOWER

<u>FIG.3</u>

START — 70

INITIALIZE — 72

RETURN — 74

76 — DRIVE MOTOR CONTROL ←→ BRAKE CONTROL — 78

FIG.2A

MOTOR

READ TPS, $P_{MC}$ — 80

CALCULATE $T_{ACCEL}$ — 82

CALCULATE $T_{COAST}$ — 84

CALCULATE $T_{BRAKE}$ — 86

$P_{MC}$ → Ⓑ

CALCULATE $T_{REGEN}$ — 88

Ⓒ

DETERMINE $T_{DEMAND}$ — 90

ASSESS OPERATING CONDITIONS, CALCULATE TMOTOR — 92

ABS

RETURN — 94

FIG.2B

FIG. 2C